# EUROPEAN PATENT SPECIFICATION

(11) **EP 2 977 663 B1**
(45) Date of publication and mention of the grant of the patent: **02.05.2018**
(21) Application number: 15178143.2
(22) Date of filing: 23.07.2015
(51) Int. Cl.: F16L 23/08, F24F 13/02, F16L 21/06

(54) **COLLAR FOR CONNECTING PIPE ENDS**
VERBINDUNGSSCHELLE ZUM VERBINDEN ZWEIER ROHRENDEN
COLLIER DE CONNECTION POUR EXTREMITE DE TUBES

(30) Priority: 24.07.2014 IT MI20141352
(43) Date of publication of application: 27.01.2016
(73) Proprietor: Zambolin, Marco, 28010 Veruno (NO) (IT)
(72) Inventor: ZAMBOLIN, Marco, 28010 VERUNO (NO) (IT)
(74) Representative: Ponzellini, Gianmarco

(56) References cited:
- GB-A- 2 158 173
- US-A1- 2007 176 425
- US-A1- 2009 189 392

## Description

### FIELD OF THE INVENTION

The present invention concerns a collar, in particular for connecting channeling modules for air processing systems, a process for realising the collar itself and a duct for air processing systems.

The invention is generally usable for realising ventilation, heating or air conditioning ducts usable in both the civil and the industrial sectors.

### PRIOR ART

Systems are known for air processing, such as heating, ventilation and air conditioning systems, constituted by ducts through which an appropriate quantity of air is transferred, starting from a ventilation device (for example a ventilator), reaches a use position, for example an environment such as a room, an office, a laboratory, a warehouse or the like. These ducts are usually made up of a plurality of channeling modules (modular elements) made of metal sheet, which can comprise transport channels and perforated channels for air diffusion. In greater detail, the channeling modules, generally made of metal material and having a circular section, have the task of transporting and diffusing the air homogeneously throughout the use zone, and, in a case of high-induction systems, the metal diffusion channels can be provided with a plurality of holes arranged along a lateral wall of the duct for injecting air into the environment to be treated. The realisation of the ducts using modular elements (channeling modules) is particularly advantageous both in terms of transport and following predisposition of the system and in terms of use flexibility; it is in fact possible to provide modules having diversified structures so as to enable design/realising of complex and large-dimension systems. Further, once the system has been predisposed it is liable to possible modification and adaptable to various conditions: for example by moving or replacing some modules the system can be reconfigured. However, in order to define the transport and diffusion duct, the modules have to be joined to each other at respective longitudinal ends; for this reason respective shoulders of each channeling module are appropriately bent externally to define a pair of lateral shoulders radially projecting from the sheet metal away from the main extension axis of the module; in other words, the circular edges defining the ends of the module are bent to emerge orthogonally from the cylindrical external surface of the tubular sheet. During the setting up of the system, the modules are flanked in succession to each other so that the lateral shoulders of two immediately-consecutive modules are facing and contacting each other. Thereafter, the lateral shoulders in contact are constrained by means of appropriate collars, surrounding the joint zones of two consecutive modules in order to lock the lateral shoulders of the modules. The collar, generally made of a metal material, is configured so as to perimetrally embrace two channeling modules so as to prevent relative transversal movements and at the same time, by blocking the lateral shoulders, to axially constrain the channeling modules.

Metal collars, for example, are known which are essentially constituted by a main circular body realised in a single piece and defining, according to a section along a lying plane of the collar itself, an open profile: the body, at the perimeter opening, has two end flaps facing each other, which are movable away and approaching to each other so as to enable radial deformability of the collar and thus enable the positioning thereof around the two channeling modules. The collar exhibits, along a cross-section thereof, a substantially "Ω" shape: the cavity of the shape is able to house and axially block the lateral shoulders of two immediately-consecutive modules while the terminal edges of the omega shape respectively abut on external lateral surfaces of the two consecutive modules so as to prevent relative transversal movements between the modules themselves. The collar further comprises two blocking portions, each comprising a plate bent to form a slot fixed by welding or riveting at an end flap (at the profile opening): the slots are configured so as to accommodate a screw-bolt system which enables coupling the two blocking portions and therefore the substantial closure of the circular profile. In fact, once the collar is positioned about the lateral shoulders of two immediately-consecutive channeling modules, the screw can be tightened to near the two end flaps of the collar and thus constrain the two modules. Though the type of collar just described enables an efficient constraint of the channeling modules, the collar is not without drawbacks. The structure of the collar is complex and expensive to make. It is in fact necessary, following the forming of the main body (open circular profile), to predispose the two blocking portions (slotted plates); in a different process, the two slots must be fixed by riveting or welding on the main body of the collar. The steps of realising and then fixing the blocking portions extend the process of realising the collar and complicate the structure thereof, both factors negatively influencing the cost of the single collar.

Also known are metal collars constituted by two bodies or semi-circular shells couplable to each other to form a single closure element. Each body exhibits, along a cross-section thereof, a substantially "Ω" shape which, as described in the foregoing, enables housing and axially blocking the lateral shoulders of two immediately-consecutive modules and at the same time preventing relative radial movements between the modules. Each shell at the two ends thereof exhibits respective connecting tabs emerging transversally from the shell in an emerging direction therefrom: the two tabs extend starting from the semi-circular shell away from each other and lying essentially on a same plane. In particular, the opposite ends of each shell are entirely and appropriately bent externally so as to define a pair of tabs emerging radially from the main body; the tabs have a through-hole configured so as to accommodate a screw-bolt fixing system. In the blocking condition of two channeling modules, the two shells are arranged about the lateral shoulders of said modules; in this condition, a tab of a shell faces a tab of the other shell and the holes thereof are substantially aligned. The two aligned holes of two facing tabs are configured so as to accommodate the screw-bolt system which enables the coupling of the two ends of the shell. The tabs together with the screw-bolt system define blocking portions of the shells about the channeling modules. In this case too, once the two shells are positioned above the lateral shoulders of two immediately-consecutive channeling modules, the two screws can be tightened at the two openings of the collar so as to near the two bodies and thus constrain the collar about two channeling modules. Though the second collar described has a simplified structure with respect to the first collar described, the second collar is not free of limitations and drawbacks. In fact, also the second collar, as it is structured and made, cannot include overlapping portions of the two shells: there are no portions extending from a shell that overlap on the other shell: the overlapping portions would lend greater support and a safer closure of the modules, a necessary condition for certain types of modules and systems. The simplified structure of the two shells thus limits the operating field thereof.

It should also be noted that the bending of the whole profile of the main body at each of the ends to define the tabs determines a crushing of the whole cross-section which causes a considerable weakening of the coupling portions; this characteristic further negatively influences the closure and containing capacity of this collar which cannot therefore be used to define stable and safe couplings between the channeling modules, in particular sealed ones. In fact, at the end portion where the tabs are located, the concave portion is completely deformed (when not also deteriorated) up to returning flat. In this way no cavities able to accommodate the channeling module are present in the zone of the collar.

A further example of a collar for metal pipes is described in document GB2158173A. Document US2007176425A1 is directed to a clamp, comprising a collar, used for connecting flanged tubes.

### AIM OF THE INVENTION

The aim of the present invention is therefore to substantially obviate at least one of the drawbacks and/or limitations of the preceding solutions.

A first objective of the invention is to disclose a collar, in particular for the connection and sealing of successive channeling modules, which enables an efficient and stable blocking of the modules, but which at the same time has a channeling modules which is easy to apply and which thus enables a simple and rapid coupling of the modules; in this way the collar makes more rapid and economical the steps of predisposing, dismantling, maintaining and repair of the modules.

One or more of the above-described aims which will appear more clearly during the course of the following description are substantially attained by a collar, a process for realising the collar and a duct for air processing systems according to one or more of the appended claims.

### BRIEF DESCRIPTION OF THE DRAWINGS

Some embodiments and some aspects of the invention will be described in the following with reference to the accompanying drawings, provided purely by way of non-limiting indication, in which:
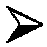 Figures 1A and 1B are perspective views of a first embodiment of a collar according to the present invention;
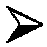 Figure 1C is a perspective view of a detail of the collar of figures 1A and 1B;
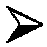 Figures 2A and 2B are perspective views of a second embodiment of a collar according to the present invention;
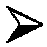 Figure 2C is a section view of a detail of the collar illustrated in figures 2A and 2B;
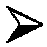 Figures 3A and 3B are perspective views of a third embodiment of a collar according to the present invention;
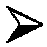 Figure 3C is a sectional view of a detail of the collar illustrated in figures 3A and 3B;
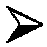 Figures 4A and 4C are schematic representations of a process for realising a collar illustrated in figures 1A, 1B;
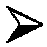 Figures 5A and 5C are schematic representations of a process for realising a collar illustrated in figures 2A, 2B;
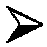 Figures 6A and 6C are schematic representations of a process for realising a collar illustrated in figures 3A, 3B;

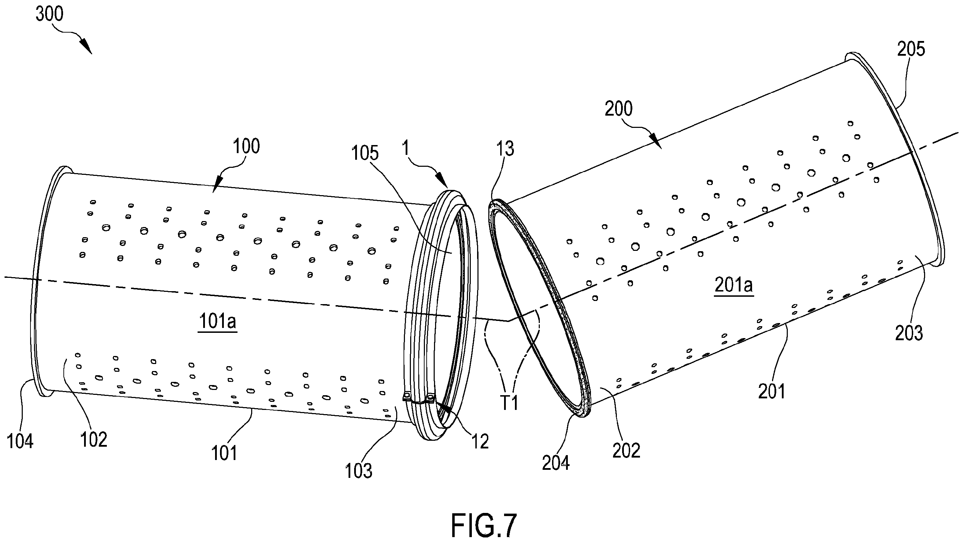

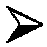 Figure 7 is a perspective view of a first and a second channeling module during a step of coupling thereof for formation of a duct according to the present invention;
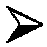 Figure 8 is a schematic perspective view of a duct according to the present invention;
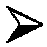 Figure 9 is a section view of a detail, along line VII-VIII, of the duct of figure 8.

### DETAILED DESCRIPTION

Number 1 denotes in its entirety a collar, in particular for connecting channeling modules 100 for air processing systems. The collar 1 can, for example, be used for realising heating, ventilation and conditioning systems, constituted by ducts 300 through which an appropriate quantity of air is transferred, said air starting from a ventilation device (for example a ventilator) or an air processing unit, reaches a use zone, for example an environment such as a room, an office, a laboratory, a warehouse or the like.

To better understand the structure and function of the collar 1 it is useful to briefly describe the structure of the ducts 300 on which said collar is suitable to operate. In detail, these ducts are made up of several channeling modules (at least two modular elements) made of sheet, in particular metal sheet; each channeling module comprises at least a tubular body extending along a predetermined path between a first and a second longitudinal end: the tubular body is configured so as to transport the air and possibly diffuse it (in the case of diffuser bodies provided with through-holes for air emission). The tubular body exhibits, at respective longitudinal ends, respective shoulders emerging radially from the body in an emerging direction therefrom; in greater detail, the opposite ends of each channeling module are appropriately bended towards the outside so as to define a pair of lateral shoulders radially projecting from the sheet away from the main extension axis of the module. In other words, the circular edges defining the ends of the module are bent so as to emerge orthogonally from the external cylindrical surface of the tubular sheet.

The collar 1 of the present invention is configured so as to connect two channeling modules aligned along a same development path and having shoulders at least partly in contact with each other. During the setting up of the system, the modules are flanked in succession to each other so that the lateral shoulders of two immediately-consecutive modules are facing and contacting each other. Thereafter, the lateral shoulders in contact are constrained by means of collars, surrounding the joint zones of two consecutive modules in order to lock the lateral shoulders of the modules. The collar 1 is configured such as to perimetrally embrace two channeling modules to prevent relative transversal movements and at the same time, by blocking the lateral shoulders, to axially constrain the channeling modules.

As will more fully emerge in the following, the realising of the ducts using modular elements (channeling modules) is particularly advantageous both in terms of transport and following predisposition of the system and in terms of use flexibility; it is in fact possible to include modules having diversified structures so as to enable design/realisation of complex and large-dimension systems. Further, once the system has been predisposed it is easily liable to modification and adaptable to various conditions.

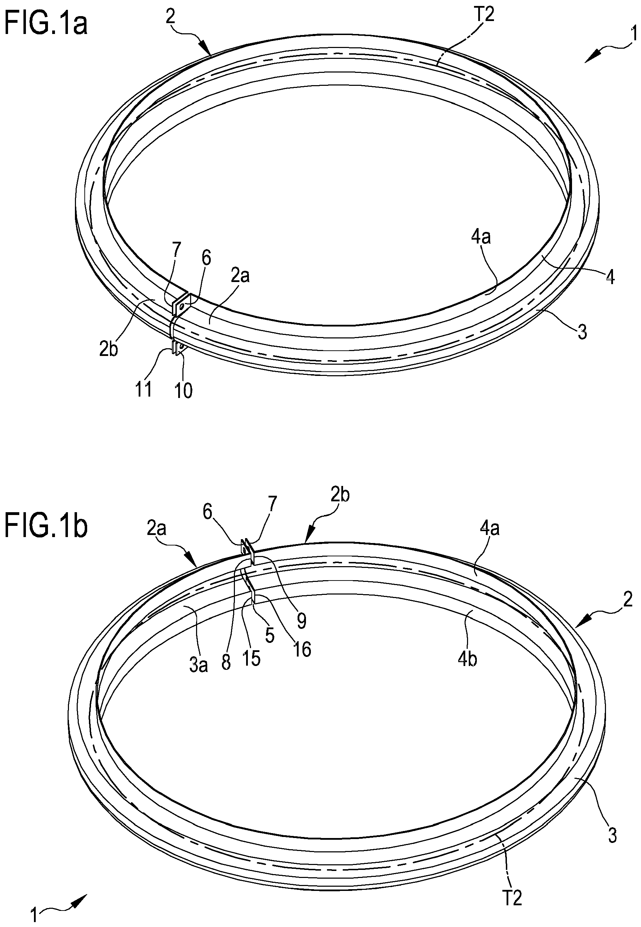

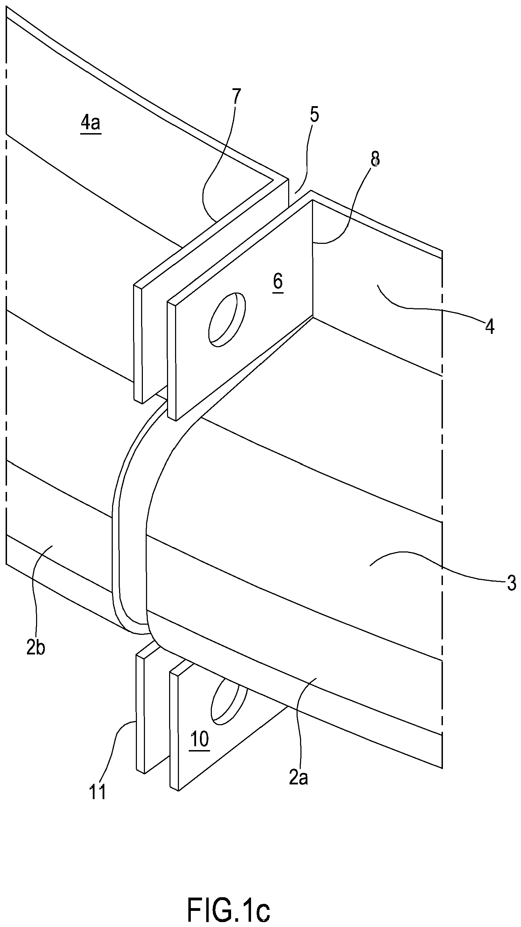

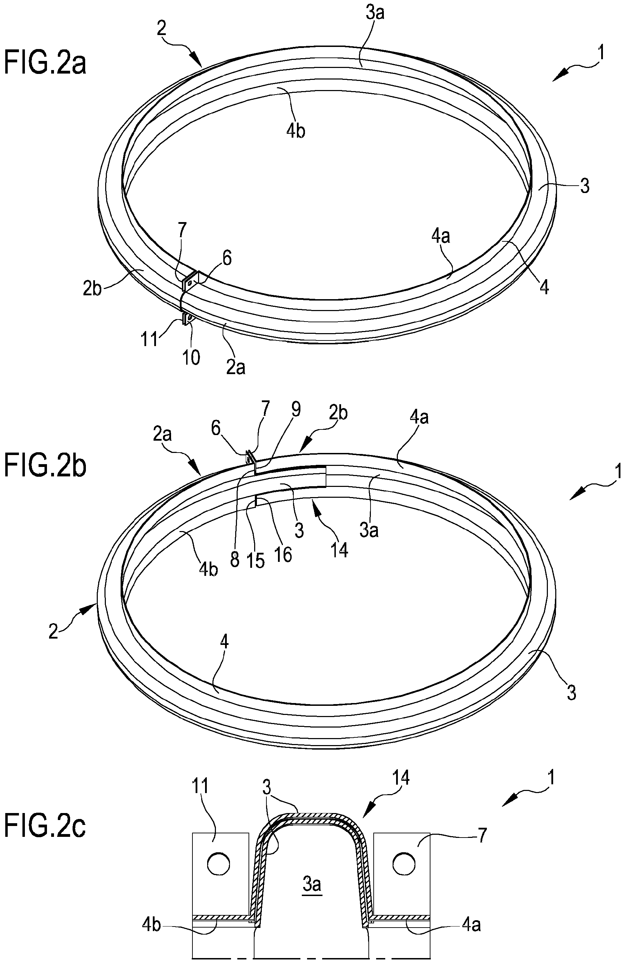

In more detail in reference to the structure of the collar 1, it can be noted from the figures that the collar 1 comprises at least a main body 2 made of sheet, in particular metal sheet, extending along a predetermined path T2 (figures 1 and 2) to essentially define a crown. In the accompanying figures a preferred but not limiting configuration is illustrated, in which the main body 2 comprises a substantially circular shape. It is however possible to realise a main body having a box shape, for example rectangular or square. As illustrated for example in figures from 1A to 3B, the main body 2 comprises at least a first and a second end portions 2a, 2b which, in an operative condition of the collar 1, are configured such as to operate in proximity of each other. In greater detail, the main body 2 extends at least between a first terminal edge 8, at the first end portion 2a, and at least a second terminal edge 9, at the second end portion 2b. At said first and second end portions 2a, 2b, the main body 2 has an opening 5: the profile of the main body 2 of the collar does not define a completely closed profile even in a condition in which the end portions are at least partly overlapping on each other. In detail, the first and the second end portion 2a, 2b of the body 2 are not integral with each other; in this way a substantially open crown is defined.

In the accompanying figures a preferred but not limiting configuration of the invention is illustrated, in which the main body 2 exhibits one opening 5 only and therefore only one of said first and second end portions 2a, 2b. In this condition, the main body 2 is defined by a single continuous portion delimited longitudinally by said end portions 2a, 2b; the portion substantially defines a circle in the condition in which the body does not have overlapping portions while it essentially defines a spiral in a case in which there is an overlapping zone.

It is however possible for the main body 2 to be constituted by a plurality of portions and therefore a plurality of openings 5 along the crown. For example, it is possible to include a main body 2 having two opposite openings 5: therefore there are two portions of the main body 2, two first end portions 2 and two second end portions 2b. The main body 2, in the condition described above, is essentially constituted by a pair of shells able to cooperate with each other so as to define said collar 1. For example, in a case of a main body 2 having a circular shape, each shell would have a semi-circular shape, while in a case of a box body 2 each shell would have a C-shape.

The main body (2), in terms of dimensions, essentially defines a perimeter having a predetermined internal passage section having an area of greater than 300 cm², in particular comprised between 500 and 2000 cm². In other words, the minimum transversal dimension defined by the main body 2 of the collar 1 is greater than 20 cm, in particular comprised between 25 and 200 cm. In the case of the collar represented in the accompanying figures, the minimum transversal dimension is defined by the diameter of the collar 1. In the case of a box-shaped collar, the minimum transversal dimension is defined by the minimum distance between two opposite sides of the body 2. Again in relation to the dimensional profile, the thickness of the sheet of the collar 1 is greater than 0.3 mm, in particular comprised between 0.5 and 1.2 mm.

As can be seen for example in figures from 1A to 3C, the main body 2, according to a cross-section thereof, has a shape having at least a concave portion 3 defining a housing seat 3a. The concave portion 3 defines a substantially overturned U-shape, or an overturned V-shape; the concavity of the portion 3 is essentially facing the inside of the crown. This portion extends along the whole main body 2 between the first end portion 2a and the second end portion 2b. In fact, in the condition in which the end portions 2a, 2b define an overlapping region 14, the concave portion 3 of the body can also have an overlapping portion: in this condition, the concave portion 3 of the body 2 is able to cross the opening 5 of the body 2 and extend to cross from an end portion to the opposite end portion. For example, observe the configuration of the collar 1 illustrated in figures 2A and 2B in which the concave portion 3 of the first end portion 2a emerges and overlaps on the concave portion 3 of the second end.

Still observing the accompanying figures, it can be seen that the main body 2, according to a cross-section, further exhibits at least an abutment portion 4 emerging from a free end of the housing seat 3a according to an emerging direction with respect thereto. In fact, the abutment portion 4, according to a cross-section to the path T2 of the body 2, comprises a straight portion emerging from the concave portion 3 in a transversal direction, in particular orthogonal, to the prevalent extension path of the main body 2. The abutment portion 4 is configured substantially to abut on an external lateral surface of the tubular body of a channeling module. In fact, the concave portion 3 is configured so as to embrace the shoulders of channeling modules aligned and in contact with each other so as to axially constrain said modules while the abutment portion 4 is configured for abutting the external lateral surface of the tubular body to substantially constrain said modules transversally.

In fact, the abutment portion 4 extends substantially over all the development of the main body 2 laterally to the concave portion. As described for the concave portion 3, the abutment portion 4 can advantageously extend, independently of the concave portion 3, along the whole main body 2 between the first end portion 2a and the second end portion 2b. In the illustrated embodiment, for example in figures 1A and 1B, the abutment portion 4 extends from the first to the second end portion 2a, 2b, and in particular from the first to the second terminal edge 8, 9, without defining overlapping regions thereof.

Vice versa, in the configuration of the collar illustrated in figures from 3A to 3C, the abutment portion 4 defines, at the end portions 2a, 2b, an overlapping region 14, also the abutment portion 4 of the body 2 can have an overlapping portion: in this condition, the abutting portion 4 is able to cross the opening 5 of the body 2 and extend to cross from an end portion to the opposite end portion.

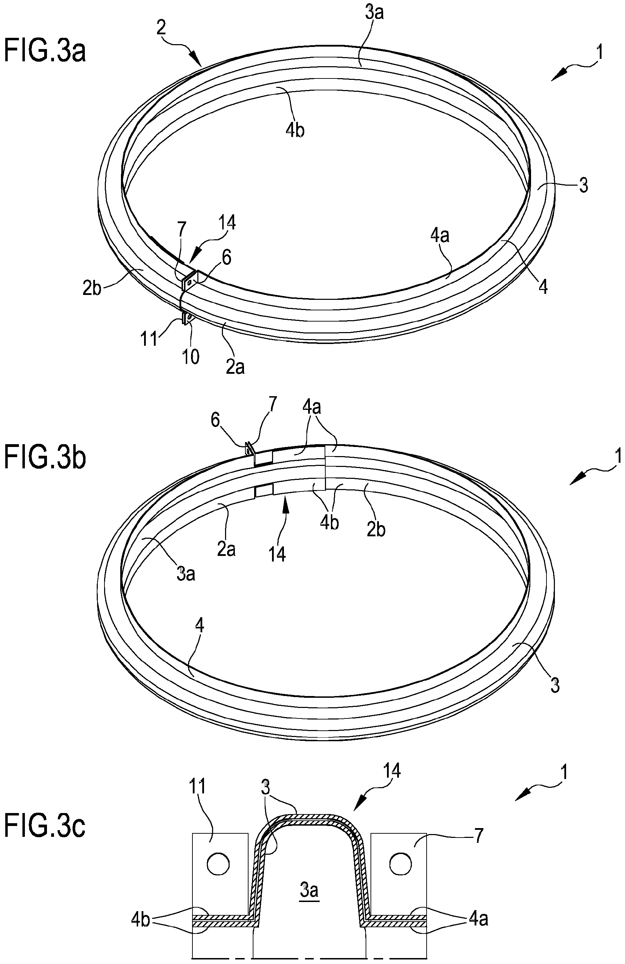

As specified above, the abutment portion 4 extends independently from the concave portion 3, and therefore in the condition in which the first and the second end portions 2a, 2b define the overlapping region 14 there can be the overlapping of portions of the abutment portion 4 and the concave portion 3 (see figure 3B for example); alternatively there can be the overlapping of only portions of the abutment portion 4 (configuration not illustrated in the figures) or the overlapping of only portions of the concave portion 3 (see for example figure 2B).

Still with reference to the abutment portion 4, it can be observed that in the accompanying figures a preferred but not exclusive configuration is illustrated in which the main body 2 comprises a first and second flat abutment portions 4a, 4b emerging beside the concave portion 3 starting from the free edges opposite to the housing seat 3a. In fact, the concave portion 3 is interposed between the first and second flat abutment portions 4a, 4b; said first and second flat portions 4a, 4b are configured for substantially abutting the respective outer side surfaces of the tubular body of two channeling modules aligned and in contact with each other. The presence of two abutment portions guarantees an excellent transversal constraint between aligned modules in contact with each other.

In the last above-described condition, the main body 2, according to a cross-section has a substantially "Q"-shape. The section extends constantly, starting from the first to the second end portion of the body 2. In this condition, the collar 1 can provide a stable and symmetrical embracing of two channeling modules aligned and in contact with each other: the collar 1 embraces the contacting shoulders over the whole perimeter of the modules, while the abutment portions 4a, 4b abutting the external surfaces of said modules extend laterally.

With respect to the dimensions, the main body 2 has a maximum width, measured perpendicularly to the prevalent extension path of the collar 1, of greater than 25 mm, in particular comprised between 30 and 50 mm. In the configuration of the collar 1 exhibiting a single abutment portion 4, the maximum width is defined by the maximum distance between a terminal edge of the abutment portion 4 and a free edge of the concave portion 3 opposite the edge from which said portion 4 extends. In the configuration in which the first and the second abutment portion 4a, 4b are present, the maximum width of the body 2 is defined by the maximum distance between the terminal edges of said portions.

It is further possible to dimensionally define the concave portion 3, which has a maximum width, measured perpendicularly to the prevalent extension path of the collar 1 of greater than 5 mm, in particular comprised between 7 and 18 mm. The concave portion further exhibits a minimum height defined by the minimum distance between a bottom portion of the seat 3a and a free edge thereof; this height is greater than 5 mm, in particular comprised between 7 and 18 mm.

As can be seen in the accompanying figures, the collar 1 comprises at least one first tab 6 integrally part of the main body 2, at the first end portion 2a, and transversally emerging away from said body 2. The collar 1 comprises at least one second tab 7 integrally part of the main body 2, at the first end portion 2b, and transversally emerging away from said body 2. The first and the second tabs 6, 7 are solidly borne by the first and the second end portion 2a, 2b and are substantially facing each other.

In detail, the main body 2 is configured to be arranged in an operative condition in which at least the first and the second tab 6, 7 are approached to each other, the main body 2 is further configured so as to be arranged in a release condition in which the first and the second tab 6, 7 are distanced and arranged at a greater distance with respect to the distance between the tabs when the main body 2 is in the operative condition. In still greater detail, the first and the second tab are configured so as to remain in the various conditions of the collar 1, facing each other, and are configured to cooperate with the aim of defining at least a closed position of the channeling modules determined by the an operative condition of the main body 2 and a predisposed position of the modules determined by the release condition of the main body 2.

The first and second tabs 6, 7 are a prolongation of the abutment portion 4 of the main body 2, while the recessed portion 3 extends at least to a lying plane of at least one of said tabs. In other words, the first and second tabs 6, 7 extend as a prolongation of the main body 2 in particular without interruption, exclusively from the abutment portion 4, particularly the first and second tabs 6, 7 do not emerge from the concave portion 3.

In a first configuration of the collar 1 illustrated in figures from 1A to 2C, the first tab 6 extends starting from the first terminal edge 8 of the first end portion 2a; in this condition the first tab 6 defines the terminal portion of the first portion 2a; the abutment portion 4 of the first end 2a terminates at the first tab 6. In this configuration, the concave portion 3 of the body 2 can extend up to the lying plane of the first tab 6 (figures from 1A to 1C) or extend beyond approaching, and possibly overlapping, the second end portion 2b (figures from 2A to 3C).

In a second configuration of the collar illustrated in figures from 3A to 3C, the first tab 6 extends from the abutment portion 4 starting from a portion rearward of the first terminal edge 8, the abutment portion 4 of the first end portion 2a which the second tab 6 emerges from, extends beyond the first tab 6 in an approaching direction, and possibly overlapping, to the second end portion 2b. In the second configuration, the concave portion 3 can extend independently up to the lying plane of the first tab 6 or can extend beyond it approaching, and possibly overlapping, the concave portion 3 of the second end portion 2b. In the configurations in which the abutment portion 4 and/or the concave portion 3 of the first end portion 2a extend beyond the first tab 6 overlapping respectively the abutment portion 4 or the concave portion 3 of the second end portion, the collar 1 is configured so as to define a more stable closure with respect to a collar in which overlapped portions are absent.

Likewise at least two different configurations of the second tab 7 can be observed. In a first configuration of the collar 1 illustrated in figures from 1A to 2C, the second tab 7 extends starting from the first terminal edge 9 of the second end portion 2b; in this condition the second tab 7 defines the terminal portion of the second portion 2b; the abutment portion 4 of the second end 2b terminates at the second tab 7. In this configuration, the concave portion 3 of the body 2 can extend independently up to the lying plane of the first tab 7 or extend beyond approaching, and possibly overlapping, the first end portion 2a.

In a second configuration of the collar illustrated in figures from 3A to 3C, the second tab 7 extends from the abutment portion 4 starting from a portion rearward of the second terminal edge 9, the abutment portion 4 of the second end portion 2b which the second tab 7 emerges from, extends beyond the second tab 7 in an approaching direction, and possibly overlapping, the first end portion 2a.

Entering into greater detail regarding the structure of said tabs 6, 7, they comprise a portion of sheet metal having, in a non limiting way, a substantially rectangular or square shape; the tabs 6, 7 essentially define straps joined to the abutment portion 4 without interruption and having, in a non limiting way, the same width as said portion 4. Each tab 6, 7, as can be seen from the accompanying figures, comprises at least a hole configured so as to cooperate with a blocking device 12, which enables passage of the collar from the release condition to the operative condition, and vice versa. The blocking device 12 will be more fully described in the following.

As described above, the collar 1 can advantageously include at least a first and a second abutment portion 4a, 4b to define a main body 2 having, according to a cross-section, a substantially "Ω" shape.

In this configuration the collar 1 can comprise a first and a second tab 6, 7 borne by the first abutment portion 4a and a third and a fourth tab 10, 11 borne by the second abutment portion 4a. In fact, the third and fourth tabs 10, 11 extend facing each other and are opposite to the first and second tabs with respect to the collar portion 3.

As for the first tab, the third tab 10 is integrally part of the main body 2, at the first end portion 2a, and transversally emerging away from said body 2. The third tab 11 is on the other hand integrally part of the main body 2, at the second end portion 2b, and transversally emerging away from said body 2. The third and the fourth tabs 10, 11 are solidly borne by the first and the second end portion 2a, 2b and are substantially facing each other.

As described above, the main body 2 is configured to be arranged in an operative condition; in this configuration, the third and the fourth tab 10, 11 are approached to each other, the main body 2 is further configured to be arranged in a release condition in which the third and the fourth tab 10, 11 are distanced and arranged at a greater distance with respect to the distance between the tabs 10, 11 when the main body 2 is in an operative condition. In still greater detail, the third and the fourth tab are configured so as to remain in the various conditions of the collar 1, facing each other, and are configured so as to cooperate with the aim of defining at least a closed position of the channeling modules determined by the an operative of the main body 2 and a predisposed position of the modules determined by the release condition of the main body 2. The third and fourth tabs 10, 11 are a prolongation of the abutment portion 4 of the main body 2, while the recessed portion 3 extends at least to a lying plane of at least one of said tabs. In other words, the third and fourth tabs 10, 11 extend as a prolongation of the main body (2) in particular without interruption, exclusively from the abutment portion 4, particularly the third and fourth tabs 10, 11 do not emerge from the concave portion 3.

In a first configuration of the collar 1 illustrated in figures from 1A to 2C, the third tab 10 extends starting from the first terminal edge 15 of the first end portion 2a; in this condition the third tab 10 defines the terminal portion of the first portion 2a; the abutment portion 4 of the first end 2a terminates at the third tab 10. In this configuration, the concave portion 3 of the body 2 can extend up to the lying plane of the third tab 6 (figures from 1A to 1C) or extend beyond approaching, and possibly overlapping, the second end portion 2b (figures from 2A to 3C).

In a second configuration of the collar illustrated in figures from 3A to 3C, the third tab 10 extends from the abutment portion 4 starting from a portion rearward of the third terminal edge 15, the abutment portion 4 of the first end portion 2a which the third tab 10 emerges from extends beyond the first tab 6 in an approaching direction to, and possibly overlaps, the second end portion 2b. In the second configuration, the concave portion 3 of the body 2 can extend independently up to the lying plane of the second tab 10 or can extend beyond it approaching, and possibly overlapping, the concave portion 3 of the second end portion 2b. In the configurations in which the abutment portion 4 and/or the concave portion 3 of the first end portion 2a extend beyond the third tab 10 overlapping respectively the abutment portion 4 or the concave portion 3 of the second end portion, the collar 1 is configured to define a more stable closure with respect to a collar in which overlapped portions are absent.

Likewise at least two different configurations of the fourth tab 11 can be observed. In a first configuration of the collar 1 illustrated in figures from 1A to 2C, the fourth tab 11 extends starting from the second terminal edge 16 of the second end portion 2b; in this condition the fourth tab 11 defines the terminal portion of the second portion 2b; the abutment portion 4 of the second end 2b terminates at the fourth tab 11. In this configuration, the concave portion 3 of the body 2 can extend independently up to the lying plane of the fourth tab 11 or extend beyond approaching, and possibly overlapping, the first end portion 2a. In a second configuration of the collar illustrated for example in figures from 3A to 3C, the fourth tab 11 extends from the abutment portion 4 starting from a portion rearward of the second terminal edge 9, the abutment portion 4 of the second end portion 2b which the fourth tab 11 emerges from, extends beyond the fourth tab 11 in an approaching direction to, and possibly overlapping, the first end portion 2a.

Entering into greater detail regarding the structure of said tabs 10, 11, they comprise a portion of sheet having, in a non limiting way, a substantially rectangular or square shape; the tabs 10, 11 essentially define plates integrally part of the abutment portion 4 without interruption and having, in a non limiting way, the same width as said portion 4. Each tab 10, 11, as can be seen from the accompanying figures, comprises at least a hole configured to cooperate with a blocking device 12, which enables passage of the collar from the release condition to the operative condition, and vice versa. The blocking device 12 will be more fully described in the following.

In fact, the first and second tabs are identical in shape and size to each other; the third and fourth tabs 10, 11 are also identical in shape and size to each other and are also identical to the first and the second tab.

It is to be noted that in the accompanying figures configurations have been illustrated in which the first and the third tab 6, 10 are substantially symmetrical to each other with respect to the concave portion 3. In particular, in a case where the first tab 6 extends starting from the free edge 8, the third end too extends starting from the third free edge which, in a non limiting way, is defined on the same lying plane as the first edge 8 and on the lying plane of the first tab 6. Alternatively, the third tab 10 cannot be arranged symmetrically to the first tab 6, for example it is possible to define an offset third tab 10 - the position of which is onward or rearward - with respect to the first tab. Independently of the first and third tab 6, 10, the second and fourth tabs 7, 11 too are substantially symmetrical to each other with respect to the concave portion 3. In particular, in a case where the second tab 7 extends starting from the free edge 9, the fourth end too extends starting from the fourth free edge which, in a non limiting way, is defined on the same lying plane as the first edge 8 and on the lying plane of the second tab 7. Alternatively, the fourth tab 11 cannot be arranged symmetrically to the second tab 7, for example it is possible to define an offset fourth tab 11 - the position of which is onward or rearward - with respect to the second tab.

### Process for realising the collar 1

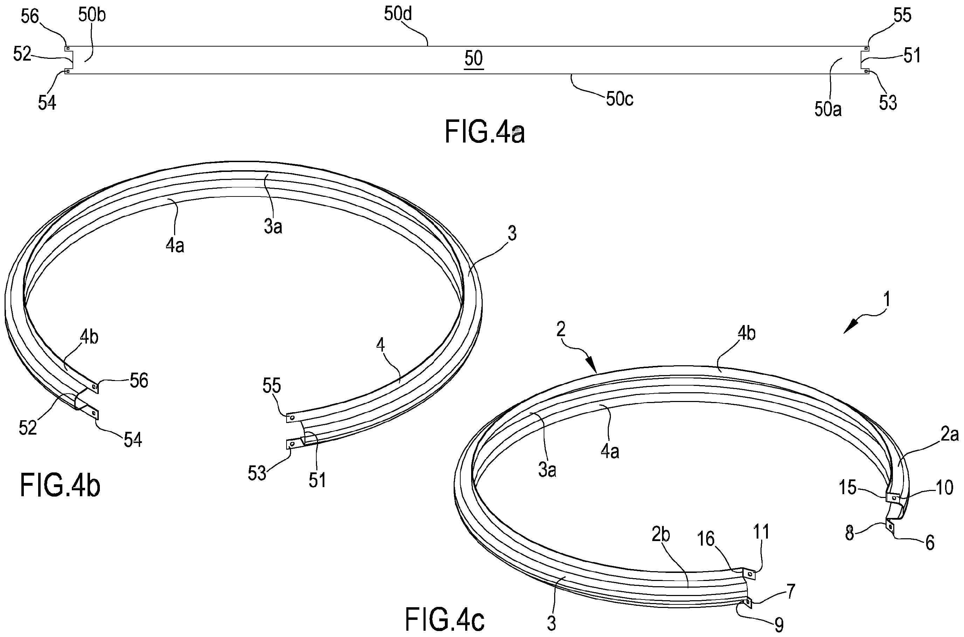

The invention further relates to a process for realising the collar 1. The process includes predisposing at least a flat foil of sheet 50, in particular made of metal material, exhibiting, in a non limiting way, a rectangular shape (see for example figures 4A, 5A and 6A). The sheet has a prevalent extension direction: the foil 50 extends between a first and a second longitudinal end 50a, 50b so as to define a strip of sheet laterally delimited by a first and a second transversal edge 50c, 50d (figures 4A, 5A and 6A).

After predisposing the foil 50, the process includes realising thereon, at the first and second end 50a, 50b, a respective first and second notching 51, 52 through the sheet and having an open profile, the first and the second notching 51, 52 define, on the sheet strip, at least a respective first and second strap 53, 54. Figure 4A illustrates, in a non limiting way, a configuration of the first notching 51, which is carried out at the terminal edge of the first end 50a. As can be seen, the first notching 51 has an open U-shape and is carried out on the center line (median line) of the strip: the first notching 51 is configured to define a first end of the sheet substantially having a C-shape laterally delimited by the first strap 53 and a third strap 55 the concavity of which is facing opposite the foil 50. The first and the third strap 53, 55 are identical and located symmetrically with respect to each other relative to the strip of the sheet 50, in particular with respect to a median line of the strip. The first and the third strap 53, 55 are integrally part of the foil 50 and have a rectangular shape. Likewise, the second notching 52 is carried out at the terminal edge of the second end 50b. As can be seen, the second notching 52 is carried out on the center line of the strip to define a second end 50b of the sheet substantially having a C-shape laterally delimited by the second strap 54 and by a fourth strap 56. The second and the fourth strap 54, 56 are identical and located symmetrically with respect to each other relative to the strip of the sheet 50, in particular symmetrically with respect to a center line of the strip. The second and the fourth strap 54, 56 are integrally part of the sheet 50 and have a rectangular shape. As can be seen from figure 4A, the first and the third strap 53, 55 are identical and symmetrical with respect to the second and fourth strap 54, 56 relative to the sheet 50.

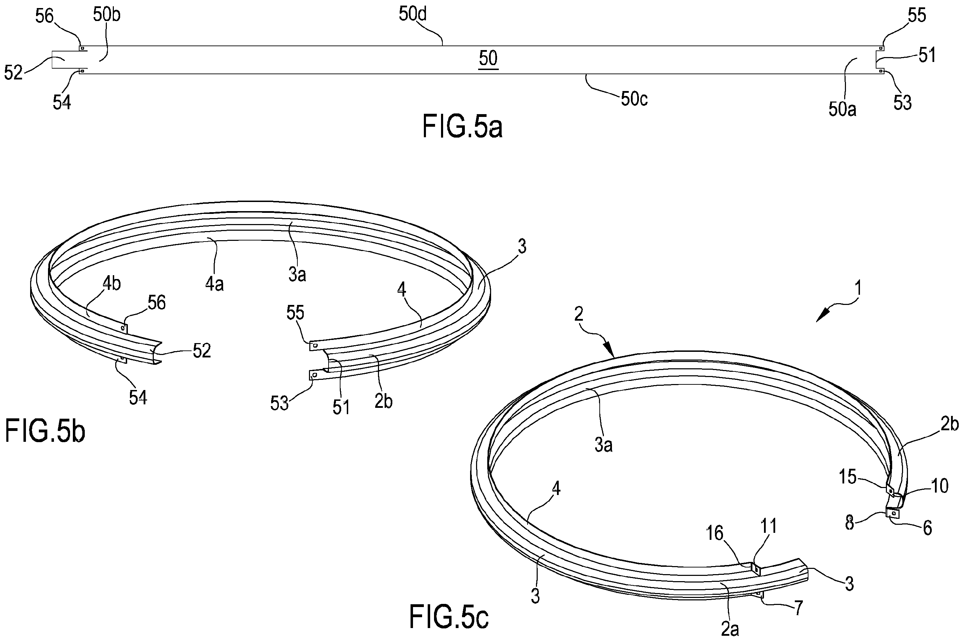

A second configuration of the sheet 50 is illustrated in figure 5A, in which the first notching is identical to the one described in the foregoing and schematised in figure 4A. The second notching 52, on the other hand, carried out at the second end 50b, is defined starting at least from a transversal edge of the strip and has an overturned T-shape. Figure 5A illustrates, in a non limiting way, a configuration of the sheet 50 in which the second notching 52 is defined starting from at least the first and second transversal edge 50c, 50d of the strip so as to define two distinct and separate portions and exhibiting an overturned T-shape. The notching defines the second and fourth strap 54, 56 which have, as described in the foregoing, a rectangular shape. The second notching 52 defines, in this configuration, a further rectangular strap integrally part of the sheet 50 and emerging between the second and the fourth strap 54, 56. Figure 5A illustrates a configuration in which the first notching 51 and the second notching 52 are different from each other. It is however possible to include a configuration in which the second notching 52, as illustrated in figure 5A, is carried out also at the first end 50a of the foil 50: in this configuration, also the first notching 51 would be defined starting from at least the first and second transversal edge of the strip to define two distinct and separate portions and exhibiting an overturned L-shape, and in particular an "Γ" shape.

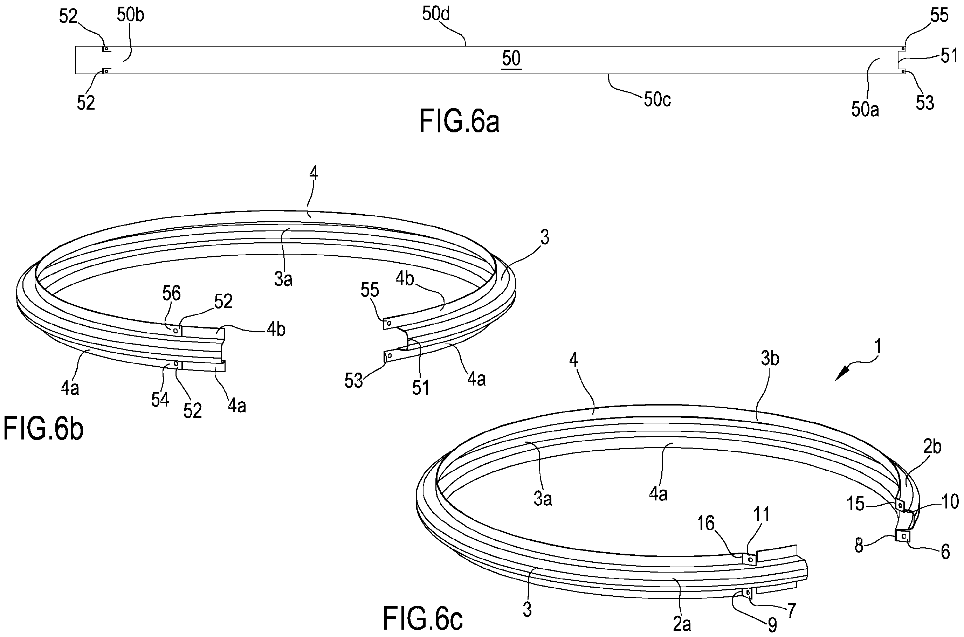

A further configuration of the sheet 50 is illustrated in figure 6A, in which the first notching is identical to the one described in the foregoing and schematised in figure 4A (a U-shaped notching defining an end having a C-shape). The second notching 52, on the other hand, carried out at the second end 50b, is defined starting at least from a transversal edge of the strip and has an overturned L-shape, and in particular an "Γ" shape. Differently to the configuration illustrated in figure 5A, the "Γ" shaped notching enables defining the second, the fourth strap 54, 56 and the further strap that emerges from the head of the straps 54, 56. In particular, the further strap has a substantially T-shape, complementarily shaped to the straps 54, 56 which are located laterally of the strip and exhibit a rectangular shape. Figure 6A illustrates a configuration in which the first notching 51 and the second notching 52 are different from each other. It is however possible to include a configuration in which the second notching 52, as illustrated in figure 6A, is carried out also at the first end 50a of the foil 50: in this configuration, also the first notching 51 would be defined starting from at least the first and second transversal edge of the strip to define two distinct and separate portions and exhibiting an overturned L-shape, and in particular an "Γ" shape.

It is further possible to carry out the above-described notchings 51, 52 entirely independently on the first and second end of the sheet 50 so as to obtain further configurations of the sheet 50.

The process can further include a step of perforating the straps; such holes will then define the holes of the tabs. The perforating step can be advantageously carried out but not limitedly at the same time as the notching step of the sheet. Following the notching and perforation of the flat strip of the foil 50, the process includes at least a step of calendering the foil 50 to define the main body 2 of the collar 1; in the figures it is illustrated,in a non limiting way, a body 2 embracing a circular crown. On the basis of the above-described strip, in particular the shape of the end portions of the strip, it is possible to obtain a body such as the one illustrated in figures 4B, 5B or 6B. The step of calendering is configured for defining the concave portion 3 and at least an abutment portion 4 of the main body 2. In the figures it has been illustrated,in a non limiting way, a calendering process for realising a crown having a concave portion 3 and, laterally thereof, the first and the second abutment portions 4a, 4b. The calendering step, together with the shaping of the foil 50, is further configured to define (or not) the overlapping region 14 of the body 2 at the first and second end portions 2a, 2b thereof.

Thereafter the process includes at least a step of bending externally the crown of the straps defined on the foil for defining the tabs of the main body 2. In particular, the process includes at least the bending of the first and the second strap 53, 54 to define, at the first end of the foil 50 (first end of the body 2), the first tab 6, while, at the second end of the foil (second end of the body), it defines the second tab 7.

The figures illustrate configurations of the foil 50 which exhibits the straps 53, 54, 55, 56; the process includes the bending of the first and second strap for defining the first and the second tab 6, 7 and the bending of the third and fourth strap 55, 56 for defining the third and the fourth tab 10, 11.

### A duct for air processing systems

The invention further relates to a duct 300 for air processing systems, for example for ventilation, heating and conditioning systems. The duct 300 comprises at least a first and a second channeling module 100, 200 made of sheet, in particular metal sheet; each of said channeling module comprises respectively at least a tubular body 101, 201 extending along a predetermined path T1 between a first and a second longitudinal end: the tubular body is configured to transport the air and possibly diffuse it (in the case of diffuser bodies provided with through-holes for air emission).

The tubular body 101 of the first module 100 extends between a first and a second longitudinal end 102, 103 along a predetermined path of prevalent extension T1. In the accompanying figures are illustrated, in a non limiting way, two modules 100, 200 both having a cylindrical tubular shape. Alternatively, bodies can be provided having a box shape and a rectangular or square section. The tubular body 101 of the first module 100 exhibits, at the first and second end 102, 103, a respective first and second shoulder 104, 105, emerging radially from the body 101 in an emerging direction therefrom; in greater detail, the opposite ends of each channeling module are appropriately bent towards the outside so as to define a pair of lateral shoulders radially projecting from the sheet metal away from the main extension axis of the module. In other words, the circular edges defining the ends of the module are bent to emerge orthogonally from the external cylindrical surface of the tubular sheet.

Likewise, the tubular body 201 of the second module 200 extends between a first and a second longitudinal end 202, 203 along a predetermined path of prevalent extension T1. Below, the profile of the shape of the second module 200 can exhibit the same shape or can have a different shape. In the appended figures, modules 100 and 200 have been illustrated having the same cylindrical shape. Alternatively a first module 100 can be included having a cylindrical tubular shape and a second module 200 having a tubular box shape.

The tubular body 201 exhibits, at the first and second end 202, 203, a respective first and second shoulder 204, 205, emerging radially from the body 201 in an emerging direction therefrom; in greater detail, like for the module 100, the opposite ends of each channeling module are appropriately bent towards the outside to define a pair of lateral shoulders radially projecting from the sheet away from the main extension axis of the module itself. In other words, the circular edges defining the ends of the module are bent to as to emerge perpendicularly from the external cylindrical surface of the tubular sheet.

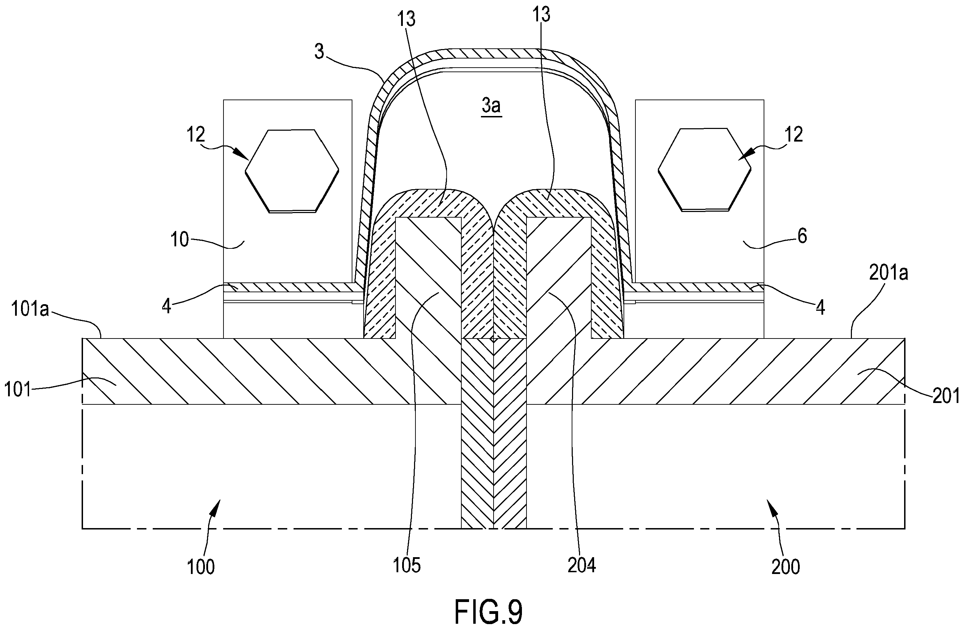

The first and second channeling modules 100, 200 are aligned with each other and are positioned in contact with each other so that at least a portion of the first shoulder 104 of the first longitudinal end 102 of the first channeling module 100, faces and is at least partially in contact with the second shoulder 205 of the second end 203 of the second channeling module 9 (figure 9). in the accompanying figures is illustrated, in a non limiting way, a conduit 300 having only a first and a second channeling module 100, 200; alternatively a plurality of first and second channeling modules can be included aligned along a predetermined path and consecutively in contact with each other. In such condition, the first shoulder 104 of the first module 100 is able to contact a second shoulder 205 of the second module 200, while the second shoulder 105 of a first module 100 is able to contact the first shoulder 104 of a first module 100.

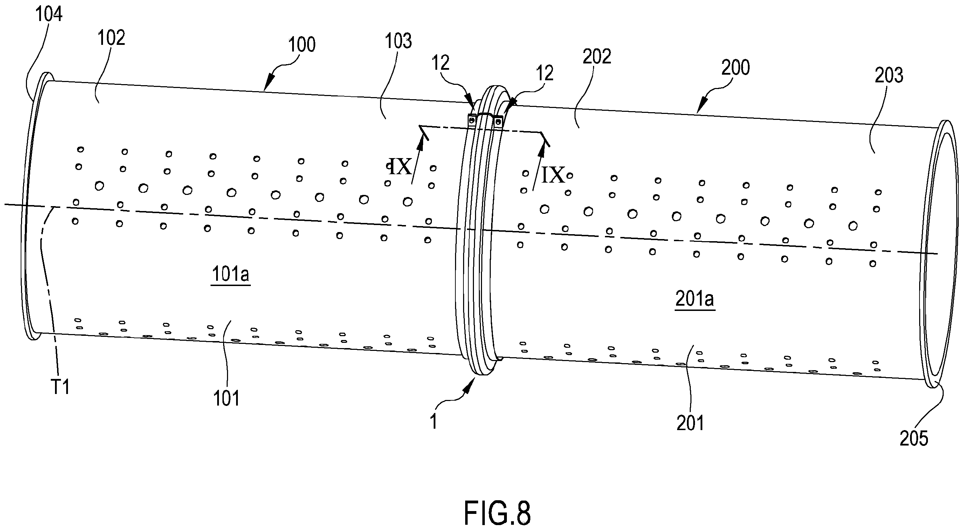

In figure 8 it has been illustrated a configuration of the modules exhibiting, in a non limiting way, at least one seal 13 at least partly perimetrally embracing the first and/or second shoulders respectively of the first and second channeling modules 100, 200, the seal 13 being at least partially interposed between the first and second shoulders of the aligned channeling modules and in contact with each other, and being configured for defining a tight closure between said contacting modules.

The duct 300 comprises at least one collar 1 engaged with the first and second channeling modules 100, 200 in contact with each other, and being configured for stably constraining the latter, the concave portion 3 of collar 1 embraces at least partially the first and second shoulders 104, 205 at least partially in contact with each other respectively of the first and second channeling modules 100, 200. The abutment portion 4 of the collar 1 is substantially abutting on an external lateral surface of the tubular body of the first or the second channeling module 100, 200. In greater detail, the collar 1 is configured for stably fixing the first and the second channeling module 100, 200 in contact with each other for preventing relative axial and transversal movements between them.

The concave portion 3 entirely surrounds the first and second shoulders of the channeling modules 100, 200 aligned and in contact with each other, as illustrated in the section of figure 10. In fact, the first shoulder 104 of the module 100 in contact with the second shoulder 205 of the module 200 are both stably engaged internally of the housing seat 3a of the concave portion 3 of the collar 1.

As described above, the collar 1 can comprise a first and a second abutment portion 4a, 4b; in this configuration, the first and a second abutment portion 4a, 4b respectively abut on a lateral surface 101a of the tubular body 101 of the first channeling module 100 and a but on a lateral surface 201a of the tubular body 201 of the second channeling module 200.

The duct 300 can further comprise at least a blocking device 12 configured for engaging at least the first and the second tab 6, 7 of the collar 1 for enabling the engagement thereof about the first and the second channeling module aligned and in contact with each other. In the configuration including the tabs 6, 7, 10 and 11, the blocking device 12 engages on a side thereof the first and second tabs 6, 7 while on the other side thereof it engages the third and fourth tabs 10, 11. The blocking device 12 can comprise at least a screw-bolt system configured for cooperating with holes made in the tabs.

As described above, the main body 2 of the collar 1 is configured to be arranged in an operative condition in which at least the first and the second tab 6, 7, possibly also the tabs 10 and 11, are approached to each other; the main body 2 is further configured so as to be arranged in a release condition in which the first and the second tab 6, 7, and possibly also the tabs 10 and 11, are distanced and arranged at a greater distance with respect to the distance between the tabs when the main body 2 is in an operative condition. The collar 1, in the release condition, is configured for sensing the positioning, in alignment and in contact with the first and second channeling module 100, 200 while the collar 1, in the operative condition, is configured for solidly constraining said first and the second channeling modules 100, 200.

As described in the foregoing, the duct 300 can further comprise at least one seal 13 at least partly perimetrally embracing the first and/or second shoulders respectively of the first and second channeling modules 100, 200, the seal 13 being at least partially interposed between the first and second shoulders of the aligned channeling modules and in contact with each other, and being configured for defining a tight closure between said contacting modules.

In particular, a seal 13 is included, entirely embracing the first shoulder of the first channeling module and/or at least a seal 13 entirely embracing the second shoulder of the first channeling module; the shoulders in contact can thus have a single seal engaged about a single shoulder or two seals engaged to the respective shoulders. The seal 13 advantageously extends along all the perimeter of the shoulders to define a completely closed profile; when the shoulders are abutted on each other, the seal 13 can define a fluid sealing between said abutted shoulders. In a case in which the seal 13 is present, the collar 1 can substantially entirely cover the seal with the aim of solidly blocking the seal on the shoulders so as to provide the correct fluid seal between the ducts. In a case in which the seal 13 is present, it is advantageously possible (in a non limiting way) to use a collar as illustrated in figures from 2A to 3C, in which the collar has at least an overlapping region 14 at least of the concave portion 3; in this configuration the overlapping region of the concave portion 3 ensures that the collar 1 can entirely, and therefore correctly, embrace the seal 13 at least over the overall perimetral extension thereof.

## Claims

1. Collar (1), specifically for connecting channeling modules for air processing systems, said channeling modules being of a type comprising a tubular body extending along a predetermined path between a first and second longitudinal ends, said tubular body having, at said longitudinal ends, respective shoulders radially emerging from the body according to a direction emerging from the latter, said collar (1) comprising:
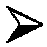 at least one main body (2) made of sheet, particularly and in a non limiting way made of metal material, extending along a predetermined path (T2) suitable for substantially defining a crown, said main body (2) having, according to a cross-section, a shape having at least one concave portion (3) defining a housing seat (3a) and at least one abutment portion (4) emerging from a free edge of the housing seat (3a) according to a direction emerging from the latter, the main body (2) being configured for being placed around aligned channeling modules and having the respective shoulders facing and contacting each other, the concave portion (3) of the main body (2) being configured for embracing at least partially the contacting shoulders of the aligned modules, while the abutment portion (4) being configured for substantially abutting an outer side surface of the tubular body of a channeling module, the main body having at least one first and at least one second end portions (2a, 2b) which, in an operative condition of the collar (1), are configured for operating in proximity to each other, the main body (2) having an opening (5) at least at said first and second end portions (2a, 2b),
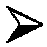 at least one first tab (6) integrally part of the main body (2), at the first end portion (2a), and transversally emerging away from said body (2),
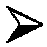 at least one second tab (7) integrally part of the main body (2), at the second end portion (2b), and transversally emerging away from said body (2), the second tab (7) substantially facing said first tab (6), the concave portion (3) extending at least to a lying plane of at least one of said tabs,
**characterized in that** the first and second tabs (6, 7) are a prolongation of the abutment portion (4) of the main body (2), the first and second tabs (6, 7) extending as a prolongation of the main body (2) exclusively from the abutment portion, wherein the first and second tabs (6, 7) do not emerge from the concave portion (3).

2. Collar according to claim 1, wherein the main body (2), at the first end portion (2a), comprises a first terminal edge (8) while, at the second end portion (2b), comprises a second terminal edge (9), the first and second terminal edges (8, 9) substantially delimiting the opening (5) of the main body (2).

3. Collar according to the preceding claim, wherein the first tab (6) extends from the abutment portion (4) starting from the terminal edge (8).

4. Collar according to claim 2 or 3, wherein the second tab (7) extends from the abutment portion (4) starting from a portion rearward the second terminal edge (9), the abutment portion (4) of the second end portion (2b) which the second tabs (7) emerges from, extending to the first end portion (2a) to define an overlapping region with the respective abutment portion (4) of the first end portion (2a) which said first tab (6) emerges from.

5. Collar according to any of the preceding claims, wherein the concave portion (3) of the first end portion (2a) extends at least substantially to a lying plane of the first tab (6).

6. Collar according to any of the preceding claims, wherein the concave portion (3) of the first end portion (2a) extends beyond the first tab (6) to define an overlapping region (14) with the concave portion (3) of the second end portion (2b) and
wherein the concave portion (3) of the second end portion (2b) extends beyond the second tab (7) in order to define an overlapping region (14) with the first concave portion (3) of the first end portion (2a).

7. Collar according to any of the preceding claims, wherein the main body (2), according to a cross-section, has a first and second flat abutment portions (4a, 4b) emerging beside the concave portion (3) starting from the free edges opposite to the housing seat (3a), the concave portion (3) being interposed between the first and second flat abutment portions (4a, 4b), said first and second flat portions (4a, 4b) being configured for substantially abutting the respective outer side surfaces of the tubular body of two aligned channeling modules and in contact with each other, particularly, the main body (2) having, according to a cross-section, a substantially "Ω" shape.

8. Collar according to the preceding claim, comprising:
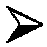 at least one third tab (10) integrally part of the main body (2), at the first end portion (2a), and transversally emerging away from said body (2), the third tab (10) being a prolongation of the abutment portion (4) of the main body (2), the first concave portion (3) extending at least to a lying plane of said third tab (10), the first tab (6) emerging from the first abutment portion (4a) while the third tab (10) emerging from the second abutment portion (4b), the concave portion (3) of the first end portion (2a) of the main body (2) being interposed between said first and third tabs (6, 10),
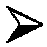 at least a fourth tab (11) integrally part of the main body (2), at the second end (2b), and transversally emerging away from said body (2), the fourth tab (11) being a prolongation of the abutment portion (4) of the main body (2), the concave portion (3) extending at least to a lying plane of said fourth tab (11), the second tab (7) emerging from the first abutment portion (4a) while the fourth tab (11) emerging from the second abutment portion (4b), the concave portion (3) of the second end portion (2b) of the main body (2), being interposed between said second and fourth tabs (7, 11),
the third and fourth tabs (10, 11) facing each other and being opposite to the first and second tabs (6, 7) with respect to the collar (3) concave portion, the third and fourth tabs (10, 11) extend as a prolongation of the main body (2) starting exclusively from the abutment portion (4), particularly the third and fourth tabs (10, 11) do not emerge from the concave portion (3).

9. Collar according to the preceding claim, wherein the concave portion (3) of the first end portion (2a) extends at least substantially to a lying plane of the third tab (10), the concave portion (3) of the first end portion (2a) extends beyond the third tab (10) to define an overlapping region (14) with the concave portion (3) of the second end portion (2b) and the concave portion (3) of the second end portion (2b) extends beyond the fourth tab (11) to define an overlapping region (14) with the concave portion (3) of the first end portion (2a).

10. Collar according to claim 8 or 9, wherein the first and third tabs (6, 10) are placed on the first end portion (2a) of the main body (2) on the same lying plane orthogonal to the prevalent extension path (T2) of the main body (2) and wherein the second and fourth tabs (7, 11) are placed on the second end portion (2b) of the main body (2) on the same lying plane orthogonal to the prevalent extension path (T2) of the main body (2) itself,
optionally the first and third tabs (6, 10) are identical in shape and size to each other while the second and fourth tabs (7, 11) are identical in shape and size to each other.

11. Collar according to any of the preceding claims, wherein the main body (2) exclusively comprises just one first end portion (2a) and exclusively just one second end portion suitable for defining a single opening (5) of the main body (2).

12. Duct (300), particularly for air processing systems, comprising:
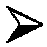 at least a first channeling module (100) comprising a tubular body (101) extending along a predetermined path (T1) between a first and second longitudinal ends (102, 103), said tubular body (101) having, at said longitudinal ends (102, 103), respective shoulders (104, 105) radially emerging from the body (101) according to a direction emerging from the latter,
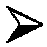 at least one second channeling module (200) comprising a tubular body (201) extending along a predetermined path (T1) between a first and second longitudinal ends (202, 203), said tubular body (201) having, at said longitudinal ends (202, 203), respective shoulders (204, 205) radially emerging from the tubular body (201) according to a direction emerging from the latter;
the first and second channeling modules (100, 200) being aligned with each other and being in contact with each other so that at least a portion of the first shoulder (104) of the first longitudinal end (102) of the first channeling module (100), faces and is at least partially in contact with the second shoulder (205) of the second end (203) of the second channeling module (200) and
wherein the duct (300) comprises at least one collar (1) according to any of the preceding claims engaged with the first and second channeling modules (100, 200) in contact with each other, and being configured for stably constraining the latter, the concave portion (3) of collar (1) embracing at least partially the first and second shoulders at least partially in contact with each other respectively of the first and second channeling modules, the abutment portion (4) of collar (1) being substantially in abutment on an outer side surface of the tubular body of the first channeling module (100).

13. Duct according to claim 12, wherein the concave portion (3) of collar (1) entirely embraces the first and second shoulders of the aligned channeling modules and in contact with each other substantially for the overall perimetral extension of said shoulders.

14. Duct according to claim 12 or 13, comprising at least one seal (13) perimetrally embracing the first and second shoulders respectively of the first and second channeling modules (100, 200), the seal (13) being at least partially interposed between the first and second shoulders of the aligned channeling modules and in contact with each other, and being configured for defining a tight closure between said contacting modules,
particularly the first concave portion (3) of collar (1) embracing the seal (13) placed around the first and second shoulders (104, 205), respectively of the first and second channeling modules (100, 200), substantially for the overall perimetral extension of said seal (13).

## Patentansprüche

1. Manschette (1), insbesondere zur Verbindung von Kanalbildungsmodulen für Luftaufbereitungssysteme, wobei die Kanalbildungsmodule von einem Typ sind, welcher einen tubusartigen Körper umfasst, welcher sich entlang eines vorbestimmten Pfads zwischen einem ersten und einem zweiten longitudinalen Ende erstreckt, wobei der tubusartige Körper an den longitudinalen Enden zugehörige Schultern aufweist, welche sich radial aus dem Körper gemäß einer Richtung herausbilden, welche sich aus dem letzteren herausbildet, wobei die Manschette (1) umfasst:
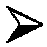 wenigstens einen Hauptkörper (2) aus Blech, insbesondere und in nicht beschränkender Weise aus einem metallischen Material, welcher sich entlang einem vorbestimmten Pfad (T2) erstreckt, welcher dazu geeignet ist, im Wesentlichen einen Kranz zu definieren, wobei der Körper (2) gemäß einem Querschnitt eine Form aufweist, welche wenigstens einen konkaven Abschnitt (3), welcher einen Gehäusesitz (3a) definiert, und wenigstens einen Anlageabschnitt (4) aufweist, welcher sich aus einem freien Rand des Gehäusesitzes (3a) gemäß einer Richtung herausbildet, welche sich aus dem Letzteren herausbildet, wobei der Hauptkörper (2) dazu eingerichtet ist, um um ausgerichtete Kanalbildungsmodule herum angeordnet zu sein, und die zugehörigen Schultern aufzuweisen, welche einander zugewandt sind und einander berühren, wobei der konkave Abschnitt (3) des Hauptkörpers (2) dazu eingerichtet ist, die sich berührenden Schultern der ausgerichteten Module wenigstens teilweise zu umklammern, während der Anlageabschnitt (4) dazu eingerichtet ist, an einer äußeren Seitenfläche des tubusartigen Körpers eines Kanalbildungsmoduls im Wesentlichen anzuliegen, wobei der Hauptkörper wenigstens einen ersten und wenigstens einen zweiten Endabschnitt (2a, 2b) aufweist, welche in einem Betriebszustand der Manschette (1) dazu eingerichtet sind, nahe beieinander zu wirken, wobei der Hauptkörper (2) eine Öffnung (5) an wenigstens dem ersten und dem zweiten Endabschnitt (2a, 2b) aufweist,
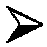 wenigstens eine erste Lasche (6), welche ein integraler Teil des Hauptkörpers (2) an dem ersten Endabschnitt (2a) ist und sich transversal weg aus dem Körper (2) herausbildet,
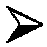 wenigstens eine zweite Lasche (7), welche ein integraler Teil des Hauptkörpers (2) an dem zweiten Endabschnitt (2b) ist, und sich transversal weg aus dem Körper (2) herausbildet, wobei die zweite Lasche (7) im Wesentlichen der ersten Lasche (6) zugewandt ist, wobei sich der konkave Abschnitt (3) wenigstens zu einer Liegeebene wenigstens einer der Laschen erstreckt,
**dadurch gekennzeichnet, dass** die erste und die zweite Lasche (6, 7) eine Verlängerung des Anlageabschnitts (4) des Hauptkörpers (2) sind, wobei sich die erste und die zweite Lasche (6,7) ausschließlich von dem Anlageabschnitt als eine Verlängerung des Hauptkörpers (2) erstrecken, wobei sich die erste und die zweite Lasche (6,7) nicht aus dem konkaven Abschnitt (3) herausbilden.

2. Manschette nach Anspruch 1, wobei der Hauptkörper (2) an dem ersten Endabschnitt (2a) einen ersten Endrand (8) umfasst, während er an dem zweiten Endabschnitt (2b) einen zweiten Endrand (9) umfasst, wobei der erste und der zweite Endrand (8,9) im Wesentlichen die Öffnung (5) des Hauptkörpers (2) begrenzen.

3. Manschette nach dem vorhergehenden Anspruch, wobei sich die erste Lasche (6) von dem Anlageabschnitt (4) ausgehend von dem Endrand (8) erstreckt.

4. Manschette nach Anspruch 2 oder 3, wobei sich die zweite Lasche (7) von dem Anlageabschnitt (4) ausgehend von einem Abschnitt hinter dem zweiten Endrand (9) erstreckt, wobei sich der Anlageabschnitt (4) des zweiten Endabschnitts (2b), aus welchem sich die zweite Lasche (7) herausbildet, zu dem ersten Endabschnitt (2a) erstreckt, um einen Überlappungsbereich mit dem zugehörigen Anlageabschnitt (4) des ersten Endabschnitts (2a) zu definieren, aus welchem sich die erste Lasche (6) herausbildet.

5. Manschette nach einem der vorhergehenden Ansprüche, wobei sich der konkave Abschnitt (3) des ersten Endabschnitts (2a) wenigstens im Wesentlichen zu einer Liegeebene der ersten Lasche (6) erstreckt.

6. Manschette nach einem der vorhergehenden Ansprüche, wobei sich der konkave Abschnitt (3) des ersten Endabschnitts (2a) über die erste Lasche (6) hinaus erstreckt, um einen Überlappungsbereich (14) mit dem konkaven Abschnitt (3) des zweiten Endabschnitts (2b) zu definieren und
wobei sich der konkave Abschnitt (3) des zweiten Endabschnitts (2b) über die zweite Lasche (7) hinaus erstreckt, um einen Überlappungsbereich (14) mit dem ersten konkaven Abschnitt (3) des ersten Endabschnitts (2a) zu definieren.

7. Manschette nach einem der vorhergehenden Ansprüche, wobei der Hauptkörper (2) gemäß einem Querschnitt einen ersten und einen zweiten ebenen Anlageabschnitt (4a, 4b) aufweist, welche sich neben dem konkaven Abschnitt (3) ausgehend von den freien Rändern gegenüberliegend zu dem Gehäusesitz (3a) erstrecken, wobei der konkave Abschnitt (3) zwischen dem ersten und dem zweiten ebenen Anlageabschnitt (4a, 4b) eingefügt ist, wobei der erste und der zweite ebene Abschnitt (4a, 4b) dazu eingerichtet sind, um im Wesentlichen an den zugehörigen äußeren Seitenflächen des tubusartigen Körpers zweier ausgerichteter und miteinander in Berührung stehender Kanalbildungsmodule anzuliegen, wobei insbesondere der Hauptkörper (2) gemäß einem Querschnitt im Wesentlichen eine "Ω" Form aufweist.

8. Manschette nach dem vorhergehenden Anspruch, umfassend:
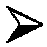 wenigstens eine dritte Lasche (10) an dem ersten Endabschnitt (2a), welche ein integraler Teil des Hauptkörpers (2) ist, und welche sich transversal weg aus dem Körper (2) herausbildet, wobei die dritte Lasche (10) eine Verlängerung des Anlageabschnitts (4) des Hauptkörpers (2) ist, wobei sich der erste konkave Abschnitt (3) wenigstens zu einer Liegeebene der dritten Lasche (10) erstreckt, wobei sich die erste Lasche (6) aus dem ersten Anlageabschnitt (4a) herausbildet, während sich die dritte Lasche (10) aus dem zweiten Anlageabschnitt (4b) herausbildet, wobei der konkave Abschnitt (3) des ersten Endabschnitts (2a) des Hauptkörpers (2) zwischen der ersten und der dritten Lasche (6,10) eingefügt ist,
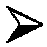 wenigstens eine vierte Lasche (11) an dem zweiten Endabschnitt (2b), welche ein integraler Teil des Hauptkörpers (2) ist, und welche sich transversal weg aus dem Körper (2) herausbildet, wobei die vierte Lasche (11) eine Verlängerung des Anlageabschnitts (4) des Hauptkörpers (2) ist, wobei sich der konkave Abschnitt (3) wenigstens zu einer Liegeebene der vierten Lasche (11) erstreckt, wobei sich die zweite Lasche (7) aus dem ersten Anlageabschnitt (4a) herausbildet, während sich die vierte Lasche (11) aus dem zweiten Anlageabschnitt (4b) herausbildet, wobei der konkave Abschnitt (3) des zweiten Endabschnitts (2b) des Hauptkörpers (2) zwischen der zweiten und der vierten Lasche (7,11) eingefügt ist,
wobei die dritte und die vierte Lasche (10,11) einander zugewandt und gegenüberliegend zu der ersten und der zweiten Lasche (6,7) in Bezug auf den konkaven Abschnitt der Manschette (3) sind, wobei sich die dritte und die vierte Lasche (10,11) als eine Verlängerung des Hauptkörpers (2) ausgehend ausschließlich von dem Anlageabschnitt (4) erstrecken, wobei sich insbesondere die dritte und die vierte Lasche (10,11) nicht aus dem konkaven Abschnitt (3) herausbilden.

9. Manschette nach dem vorhergehenden Anspruch, wobei sich der konkave Abschnitt (3) des ersten Endabschnitts (2a) wenigstens im Wesentlichen zu einer Liegeebene der dritten Lasche (10) erstreckt, wobei sich der konkave Abschnitt (3) des ersten Endabschnitts (2a) über die dritte Lasche (10) hinaus erstreckt, um einen Überlappungsbereich (14) mit dem konkaven Abschnitt (3) des zweiten Endabschnitts (2b) zu definieren, und wobei sich der konkave Abschnitt (3) des zweiten Endabschnitts (2b) über die vierte Lasche (11) hinaus erstreckt, um einen Überlappungsbereich (14) mit dem konkaven Abschnitt (3) des ersten Endabschnitts (2a) zu definieren.

10. Manschette nach Anspruch 8 oder 9, wobei die erste und die dritte Lasche (6, 10) an dem ersten Endabschnitt (2a) des Hauptkörpers (2) an der gleichen Liegeebene angeordnet sind, welche orthogonal zu dem vorherrschenden Erstreckungspfad (T2) des Hauptkörpers (2) ist, und wobei die zweite und die vierte Lasche (7, 11) an dem zweiten Endabschnitt (2b) des Hauptkörpers (2) an der gleichen Liegeebene angeordnet sind, welche orthogonal zu dem vorherrschenden Erstreckungspfad (T2) des Hauptkörpers (2) selbst ist,
wobei optional die erste und die dritte Lasche (6,10) in Form und Größe zueinander identisch sind, während die zweite und die vierte Lasche (7, 11) in Form und Größe zueinander identisch sind.

11. Manschette nach einem der vorhergehenden Ansprüche, wobei der Hauptkörper (2) ausschließlich nur einen ersten Endabschnitt (2a) und ausschließlich nur einen zweiten Endabschnitt umfasst, welche dazu geeignet sind eine einzige Öffnung (5) des Hauptkörpers (2) zu definieren.

12. Kanal (300), insbesondere für Luftaufbereitungssysteme, umfassend:
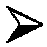 wenigstens ein erstes Kanalbildungsmodul (100), umfassend einen tubusartigen Körper (101), welcher sich entlang eines vorbestimmten Pfads (T1) zwischen einem ersten und einem zweiten longitudinalen Ende (102, 103) erstreckt, wobei der tubusartige Körper (101) an den longitudinalen Enden (102, 103) zugehörige Schultern (104, 105) aufweist, welche sich radial aus dem Körper (101) gemäß einer Richtung herausbilden, welche sich aus dem letzteren herausbildet,
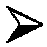 wenigstens ein zweites Kanalbildungsmodul (200), umfassend einen tubusartigen Körper (201), welcher sich entlang eines vorbestimmten Pfads (T1) zwischen einem ersten und einem zweiten longitudinalen Ende (202, 203) erstreckt, wobei der tubusartige Körper (201) an den longitudinalen Enden (202, 203) zugehörige Schultern (204, 205) aufweist, welche sich radial aus dem tubusartigen Körper (201) gemäß einer Richtung herausbilden, welche sich aus dem letzteren herausbildet;
wobei das erste und das zweite Kanalbildungsmodul (100, 200) miteinander ausgerichtet sind und miteinander in Berührung stehen, so dass wenigstens ein Abschnitt der ersten Schulter (104) des ersten longitudinalen Endes (102) des ersten Kanalbildungsmoduls (100) der zweiten Schulter (205) des zweiten Endes (203) des zweiten Kanalbildungsmoduls (200) zugewandt ist und wenigstens teilweise mit dieser in Berührung steht und
wobei der Kanal (300) wenigstens eine Manschette (1) nach einem der vorhergehenden Ansprüche umfasst, welche mit dem ersten und dem zweiten Kanalbildungsmodul (100, 200) in Eingriff steht, welche miteinander in Berührung stehen, und welche dazu eingerichtet ist, die Letzteren stabil zu halten, wobei der konkave Abschnitt (3) der Manschette (1) die erste und die zweite Schulter, welche wenigstens teilweise in Berührung miteinander stehen, jeweils des ersten und des zweiten Kanalbildungsmoduls, wenigstens teilweise umklammert, wobei der Anlageabschnitt (4) der Manschette (1) im Wesentlichen an einer äußeren Seitenfläche des tubusartigen Köpers des ersten Kanalbildungsmoduls (100) in Anlage ist.

13. Kanal nach Anspruch 12, wobei der konkave Abschnitt (3) der Manschette (1) die erste und die zweite Schulter der ausgerichteten und miteinander in Berührung stehenden Kanalbildungsmodule im Wesentlichen über die gesamte Umfangserstreckung der Schultern vollständig umklammert.

14. Kanal nach Anspruch 12 oder 13, umfassend wenigstens ein Abdichtelement (13), welches die erste und die zweite Schulter jeweils des ersten und des zweiten Kanalbildungsmoduls (100, 200) umfänglich umklammert, wobei das Abdichtelement (13) wenigstens teilweise zwischen der ersten und der zweiten Schulter der ausgerichteten und miteinander in Berührung stehenden Kanalbildungsmodule eingefügt ist und dazu eingerichtet ist, einen dichten Verschluss zwischen den sich berührenden Modulen zu definieren,
wobei insbesondere der konkave Abschnitt (3) der Manschette (1) das Abdichtelement (13) umklammert, welches um die erste und die zweite Schulter (104, 205), jeweils des ersten und des zweiten Kanalbildungsmoduls (100, 200), im Wesentlichen über die gesamte Umfangserstreckung des Abdichtelements (13) herum angeordnet ist.

## Revendications

1. Collier (1), particulièrement destiné à relier des modules de canalisation de systèmes de traitement d'air, lesdits modules de canalisation étant d'un type comprenant un corps tubulaire s'étendant le long d'un trajet prédéterminé entre une première et une seconde extrémité longitudinale, ledit corps tubulaire ayant, au niveau desdites extrémités longitudinales, des épaules respectives émergeant radialement du corps selon un sens émergeant de ce dernier, ledit collier (1) comprenant :
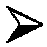 au moins un corps principal (2) constitué d'une feuille, particulièrement et d'une manière non limitante constitué d'un matériau métallique, s'étendant le long d'un trajet prédéterminé (T2) convenant pour sensiblement définir une couronne, ledit corps principal (2) ayant, selon une section transversale, une forme ayant au moins une partie concave (3) définissant une assise de logement (3a) et au moins une partie de mise en butée (4) émergeant d'un bord libre de l'assise de logement (3a) selon un sens émergeant de cette dernière, le corps principal (2) étant configuré pour être placé autour des modules de canalisation alignés et ayant les épaules respectives faisant face et en contact l'une avec l'autre, la partie concave (3) du corps principal (2) étant configurée pour embrasser au moins partiellement les épaules de contact des modules alignés, tandis que la partie de mise en butée (4) étant configurée pour mettre sensiblement en butée une surface latérale externe du corps tubulaire d'un module de canalisation, le corps principal ayant au moins une première et au moins une seconde partie d'extrémité (2a, 2b) qui, dans un état de fonctionnement du collier (1), sont configurées pour le fonctionnement à proximité l'une de l'autre, le corps principal (2) présentant une ouverture (5) au moins au niveau desdites premières et secondes parties d'extrémité (2a, 2b),
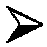 au moins une première patte (6) faisant intégralement partie du corps principal (2), au niveau de la première partie d'extrémité (2a), et émergeant transversalement hors dudit corps (2),
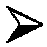 au moins une seconde patte (7) faisant intégralement partie du corps principal (2), au niveau de la seconde partie d'extrémité (2b), et émergeant transversalement hors dudit corps (2), la seconde patte (7) faisant sensiblement face à ladite première patte (6), la partie concave (3) s'étendant au moins jusqu'à un plan de repos d'au moins l'une desdites pattes,
**caractérisé en ce que** la première et la seconde patte (6, 7) sont un prolongement de la partie de mise en butée (4) du corps principal (2), la première et la seconde patte (6, 7) s'étendant comme prolongement du corps principal (2) exclusivement depuis la partie de mise en butée, la première et la seconde patte (6, 7) n'émergent pas de la partie concave (3).

2. Collier selon la revendication 1, le corps principal (2), au niveau de la première partie d'extrémité (2a), comprenant un premier bord terminal (8) tandis que, au niveau de la seconde partie d'extrémité (2b), comprenant un second bord terminal (9), le premier et le second bord terminal (8, 9) délimitent sensiblement l'ouverture (5) du corps principal (2).

3. Collier selon la revendication précédente, la première patte (6) s'étendant depuis la partie de mise en butée (4) commençant depuis le bord terminal (8).

4. Collier selon la revendication 2 ou 3, la seconde patte (7) s'étendant depuis la partie de mise en butée (4) commençant depuis une partie vers l'arrière du second bord terminal (9), la partie de mise en butée (4) de la seconde partie d'extrémité (2b) de laquelle émergent les secondes pattes (7), s'étendant vers la première partie d'extrémité (2a) afin de définir une région chevauchante avec la partie de mise en butée respective (4) de la première partie d'extrémité (2a) de laquelle émerge ladite première patte (6).

5. Collier selon l'une quelconque des revendications précédentes, la partie concave (3) de la première partie d'extrémité (2a) s'étendant au moins sensiblement jusqu'à un plan de repos de la première patte (6).

6. Collier selon l'une quelconque des revendications précédentes, la partie concave (3) de la première partie d'extrémité (2a) s'étendant au-delà de la première patte (6) pour définir une région chevauchante (14) avec la partie concave (3) de la seconde partie d'extrémité (2b) et
la partie concave (3) de la seconde partie d'extrémité (2b) s'étendant au-delà de la seconde patte (7) afin de définir une région chevauchante (14) avec la première partie concave (3) de la première partie d'extrémité (2a).

7. Collier selon l'une quelconque des revendications précédentes, le corps principal (2), selon une section transversale, présentant une première et une seconde partie de mise en butée plate (4a, 4b) émergeant au-delà de la partie concave (3) commençant depuis les bords libres opposés à l'assise de logement (3a), la partie concave (3) étant interposée entre la première et la seconde partie de mise en butée plate (4a, 4b), lesdites premières et secondes parties plates (4a, 4b) étant configurées pour venir sensiblement en butée contre les surfaces latérales externes respectives du corps tubulaire de deux modules de canalisation alignés et en contact l'un avec l'autre, particulièrement, le corps principal (2) ayant, selon une section transversale, une forme sensiblement en « Ω ».

8. Collier selon la revendication précédente, comprenant :
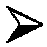 au moins une troisième patte (10) faisant intégralement partie du corps principal (2), au niveau de la première partie d'extrémité (2a), et émergeant transversalement hors dudit corps (2), la troisième patte (10) étant un prolongement de la partie de mise en butée (4) du corps principal (2), la première partie concave (3) s'étendant au moins jusqu'à un plan de repos de ladite troisième patte (10), la première patte (6) émergeant de la première partie de mise en butée (4a) tandis que la troisième patte (10) émerge de la seconde partie de mise en butée (4b), la partie concave (3) au niveau de la première partie d'extrémité (2a) du corps principal (2) étant interposée entre lesdites premières et troisièmes pattes (6, 10),
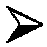 au moins une quatrième patte (11) faisant intégralement partie du corps principal (2), au niveau de la seconde extrémité (2b), et émergeant transversalement loin dudit corps (2), la quatrième patte (11) étant un prolongement de la partie de mise en butée (4) du corps principal (2), la partie concave (3) s'étendant au moins jusqu'à un plan de repos de ladite quatrième patte (11), la seconde patte (7) émergeant de la première partie de mise en butée (4a) tandis que la quatrième patte (11) émerge de la seconde partie de mise en butée (4b), la partie concave (3) de la seconde partie d'extrémité (2b) du corps principal (2), étant interposée entre lesdites secondes et quatrièmes pattes (7, 11),
la troisième et la quatrième patte (10, 11) se faisant face l'une l'autre et étant opposées à la première et la seconde patte (6, 7) par rapport à la partie concave du collier (3), la troisième et la quatrième patte (10, 11) s'étendent comme un prolongement du corps principal (2) commençant exclusivement depuis la partie de mise en butée (4), particulièrement la troisième et la quatrième patte (10, 11) n'émergent pas de la partie concave (3).

9. Collier selon la revendication précédente, la partie concave (3) de la première partie d'extrémité (2a) s'étendant au moins sensiblement jusqu'à un plan de repos de la troisième patte (10), la partie concave (3) de la première partie d'extrémité (2a) s'étendant au-delà de la troisième patte (10) pour définir une région chevauchante (14) avec la partie concave (3) de la seconde partie d'extrémité (2b) et la partie concave (3) de la seconde partie d'extrémité (2b) s'étendant au-delà de la quatrième patte (11) afin de définir une région chevauchante (14) avec la partie concave (3) de la première partie d'extrémité (2a).

10. Collier selon la revendication 8 ou 9, la première et la troisième patte (6, 10) étant placées sur la première partie d'extrémité (2a) du corps principal (2) sur le même plan de repos orthogonal au trajet d'extension prévalent (T2) du corps principal (2) et la seconde et la quatrième patte (7, 11) étant placées sur la seconde partie d'extrémité (2b) du corps principal (2) sur le même plan de repos orthogonal au trajet d'extension prévalent (T2) du corps principal (2) lui-même,
éventuellement la première et la troisième patte (6, 10) sont de forme et de taille identiques l'une par rapport à l'autre tandis que la seconde et la quatrième patte (7, 11) sont de forme et de taille identiques l'une par rapport à l'autre.

11. Collier selon l'une quelconque des revendications précédentes, le corps principal (2) comprenant exclusivement juste une première partie d'extrémité (2a) et exclusivement juste une seconde partie d'extrémité convenant à la définition d'une ouverture unique (5) du corps principal (2).

12. Conduit (300), particulièrement destiné à des systèmes de traitement d'air, comprenant :
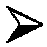 au moins un premier module de canalisation (100) comprenant un corps tubulaire (101) s'étendant le long d'un trajet prédéterminé (T1) entre une première et une seconde extrémité longitudinale (102, 103), ledit corps tubulaire (101) ayant, au niveau desdites extrémités longitudinales (102, 103), des épaules respectives (104, 105) émergeant radialement du corps (101) selon un sens émergeant de ce dernier,
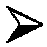 au moins un second module de canalisation (200) comprenant un corps tubulaire (201) s'étendant le long d'un trajet prédéterminé (T1) entre une première et une seconde extrémité longitudinale (202, 203), ledit corps tubulaire (201) ayant, au niveau desdites extrémités longitudinales (202, 203), des épaules respectives (204, 205) émergeant radialement du corps tubulaire (201) selon un sens émergeant de ce dernier ;
le premier et le second module de canalisation (100, 200) étant alignés l'un avec l'autre et se trouvant en contact l'un avec l'autre afin qu'au moins une partie de la première épaule (104) de la première extrémité longitudinale (102) du premier module de canalisation (100), se trouve face à, et se trouve au moins partiellement en contact avec, la seconde épaule (205) de la seconde extrémité (203) du second module de canalisation (200) et
le conduit (300) comprenant au moins un collier (1) selon l'une quelconque des revendications précédentes en prise avec le premier et le second module de canalisation (100, 200) en contact l'un avec l'autre, et étant configuré pour contraindre ces derniers de manière stable, la partie concave (3) du collier (1) embrassant au moins partiellement la première et la seconde épaule au moins partiellement en contact respectivement l'une avec l'autre du premier et du second module de canalisation, la partie de mise en butée (4) du collier (1) étant sensiblement en butée sur une surface latérale externe du corps tubulaire du premier module de canalisation (100).

13. Conduit selon la revendication 12, la partie concave (3) du collier (1) embrassant entièrement la première et la seconde épaule des modules de canalisation alignés et en contact l'une avec l'autre sensiblement pour l'extension dans le périmètre total desdites épaules.

14. Conduit selon la revendication 12 ou 13, comprenant au moins un joint d'étanchéité (13) embrassant dans le périmètre la première et la seconde épaule respectivement du premier et du second module de canalisation (100, 200), le joint d'étanchéité (13) étant au moins partiellement interposé entre la première et la seconde épaule des modules de canalisation alignés et en contact l'une avec l'autre, et étant configuré pour définir une fermeture hermétique entre lesdits modules de mise en contact,
particulièrement la première partie concave (3) du collier (1) embrassant le joint d'étanchéité (13) placé autour de la première et de la seconde épaule (104, 205), respectivement du premier et du second module de canalisation (100, 200), sensiblement pour l'extension dans le périmètre total dudit joint d'étanchéité (13).
